# EUROPÄISCHE PATENTSCHRIFT

(11) **EP 3 226 446 B1**
(45) Veröffentlichungstag und Bekanntmachung des Hinweises auf die Patenterteilung: **26.09.2018**
(21) Anmeldenummer: 16162880.5
(22) Anmeldetag: 30.03.2016
(51) Int. Cl.: H04B 17/309

(54) **VERFAHREN ZUR ERMITTLUNG EINER SIGNALQUALITÄT EINER FUNK-VERBINDUNG ZWISCHEN EINER FUNK-BASISSTATION UND ZUMINDEST EINER FUNK-TEILNEHMERSTATION UND FUNK-BASISSTATION**
METHOD FOR DETERMINING A SIGNAL QUALITY FOR RADIO CONNECTION BETWEEN A RADIO BASE STATION AND AT LEAST ONE RADIO SUBSCRIBER STATION AND A RADIO BASE STATION
PROCEDE DE DETERMINATION D'UNE QUALITE DE SIGNAL D'UNE LIAISON RADIO ENTRE UNE STATION DE BASE RADIO ET AU MOINS UN POSTE D'ABONNE RADIO ET STATION DE BASE RADIO

(43) Veröffentlichungstag der Anmeldung: 04.10.2017
(73) Patentinhaber: Siemens Aktiengesellschaft, 80333 München (DE)
(72) Erfinder: BUSCH, Wilhelm, 76187 Karlsruhe (DE); MÜLLER, Jörg, 76351 Linkenheim (DE)

(56) Entgegenhaltungen:
- WO-A1-2010/097722
- US-A1- 2012 134 280

## Beschreibung

Die vorliegende Erfindung betrifft ein Verfahren zur Ermittlung einer Signalqualität einer Funk-Verbindung zwischen einer Funk-Basisstation und zumindest einer Funk-Teilnehmerstation sowie eine zur Durchführung des Verfahrens geeignete Funk-Basisstation, insbesondere eine Funk-Basisstation eines industriellen Automatisierungssystems. Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus EP 2 328 370 A1 ist ein Verfahren zur Interferenzmessung in einem drahtlosen Kommunikationssystem bekannt, bei dem ein Kommunikationsgerät des drahtlosen Kommunikationssystems zunächst eine Übermittlung von Nutzdaten stoppt und ein Datenpaket mit Test-Daten generiert. Dieses Datenpaket wird an andere Kommunikationsgeräte innerhalb des drahtlosen Kommunikationssystems übermittelt. Für eine Übermittlung des Datenpakets mit Test-Daten werden dabei durchschnittliche Verzögerungen bei einem jeweiligen Funkkanalzugriff ermittelt. Interferenzen innerhalb des drahtlosen Kommunikationssystems werden auf Grundlage der durchschnittlichen Funkkanalzugriff-Verzögerungen ermittelt.

In EP 2 421 297 B1 ist ein Verfahren zum Kanalwechsel in einem drahtlosen Kommunikationsnetz beschrieben, das einen Zugangsknoten und mehrere Clients umfasst. Das Kommunikationsnetz nutzt in einem vorgegebenen Frequenzbereich einen von mehreren möglichen Kanälen als Sekundärnutzer zur Datenkommunikation. Zwischen dem Zugangsknoten und den Clients erfolgt eine Datenkommunikation über eine erste Sende-/Empfangsschnittstelle des Zugangsknotens auf einem ersten möglichen Kanal. Über die erste Sende-/Empfangsschnittstelle werden parallel zur Datenkommunikation durch eine zweite Sende-/Empfangsschnittstelle des Zugangsknotens die möglichen Kanäle daraufhin überprüft, welche Kanäle freie Kanäle sind, die durch keinen Primärnutzer verwendet werden. Wenn durch den Zu-gangsknoten des Kommunikationsnetzwerks eine bevorrechtigte Nutzung des ersten Kanals durch einen Primärnutzer festgestellt wird, erfolgt ein Kanalwechsel vom ersten Kanal auf einen der freien Kanäle.

US 7 929 508 B1 betrifft ein Signalanalyseverfahren zur Verarbeitung und Klassifizierung von durch ein WLAN-Kommunikationsgerät empfangenen Funksignalen. Dabei werden mehrere Spektraldatenmesswerte erfasst, die Zeit-Frequenz-Daten und Empfangssignalstärkeindikatoren umfassen, die den durch das WLAN-Kommunikationsgerät empfangenen Funksignalen zugeordnet sind. Die Zeit-Frequenz-Daten und Empfangssignalstärkeindikatoren zu jedem Spektraldatenmesswert werden darauf analysiert, ob der jeweilige Spektraldatenmesswert einem Schmalbandsignal zugeordnet ist. Falls ein Schmalbandsignal vorliegt, wird ein Schmalbandinterferenzsignal ermittelt, das den durch das WLAN-Kommunikationsgerät empfangenen Funksignalen zugeordnet ist, und zwar auf Grundlage von Parametern der Spektraldatenmesswerte.

Aus US 2012/134280 A1 ist ein System zum Messen und Analysieren von Funk- Signalmesswerten innerhalb eines vermaschten Funk-Kommunikationssystems bekannt. Dabei sammelt und analysiert ein zentrales Softwaremodul Funk-Signalmesswerte von zumindest einer Funk-Teilnehmerstation, die auf einem zugewiesenen Funk-Kanal zu vorgegebenen Zeitpunkten erfasst werden. Jede Funk-Teilnehmerstation führte entsprechende Messungen zu Zeitpunkten durch, zu denen keine Übermittlung eines Bestätigungssignals bzw. eines Nicht-Bestätigungssignals vorgesehen ist. Die Funk-Signalmesswerte werden in der jeweiligen Funk-Teilnehmerstation so lange gespeichert, bis sie erfolgreich zum zentralen Softwaremodul gemeldet werden. Kommunikation unter den Funk-Teilnehmerstationen wird durch einen Netzwerkmanager entsprechend den Funk-Signalmesswerten koordiniert.

In WO 2010/097722 A1 ist ein Verfahren zum Planen und Einhalten von Ruheperioden in einem Funk-Kommunikationssystem beschrieben. Das Funk-Kommunikationssystem umfasst eine Vielzahl von Teilnetzen, die jeweils eine Basisstation und zumindest eine zugeordnete Teilnehmerstation umfassen. Dabei sendet die Basisstationen innerhalb von Beacons Informationen über einen Zeitplan für die Ruheperioden und über Reservierungen von Sende-Zeitschlitzen für die Teilnehmerstationen. Die Teilnehmerstationen können während der Sende-Zeitschlitze jeweils Anforderungen für Ruheperioden senden, die durch einen Zeitplan der jeweiligen Teilnehmerstation definiert sind. Sowohl die jeweilige Basisstation als auch die zugeordneten Teilnehmerstationen unterbinden Sendevorgänge entsprechend dem durch die Basisstation bekanntgegebenen Zeitplan für die Ruheperioden.

Insbesondere in industriellen Automatisierungssystemen sind im Rahmen von Inbetriebnahme und laufendem Betrieb genaue Verbindungsanalysen zwischen WLAN Access Points und WLAN Clients äußerst hilfreich, insbesondere zur Klassifizierung von Verbindungsstrecken und resultierenden Datenraten. Derartige Verbindungsanalysen basieren auf Parametern von empfangenen unidirektionalen Signalen.

Der vorliegenden Erfindung liegt die Aufgabe zugrunde, ein Verfahren zur Ermittlung einer Signalqualität einer Funk-Verbindung zwischen einer Funk-Basisstation und zumindest einer Funk-Teilnehmerstation mit verbesserter Genauigkeit sowie zur Durchführung des Verfahrens geeignete Vorrichtungen zu schaffen.

Diese Aufgabe wird erfindungsgemäß durch ein Verfahren mit den in Anspruch 1 angegebenen Merkmalen sowie durch eine Funk-Basisstation mit den in Anspruch 11 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur Ermittlung einer Signalqualität einer Funk-Verbindung zwischen einer Funk-Basisstation und zumindest einer Funk-Teilnehmerstation sendet die Funk-Basisstation periodisch erste Datagramme über eine Verfügbarkeit von an der Funk-Basisstation gemessenen Signalparametern. Die ersten Datagramme sind vorzugsweise Beacon Frames. Die Funk-Teilnehmerstation übermittelt nach Initiierung einer Ermittlung der Signalqualität der Funk-Verbindung zwischen der Funk-Basisstation und der Funk-Teilnehmerstation und bei Empfang eines ersten Datagramms ein zweites Datagramm mit einer Anforderung zur Messung von Signalparametern an die Funk-Basisstation. Das zweite Datagramm umfasst zumindest eine Angabe über einen Zeitraum für die Messung. Zusätzlich kann das zweite Datagramm beispielsweise eine Angabe über zumindest einen zu erfassenden Signalparameter umfassen, der eine Auswahl aus im ersten Datagramm angegebenen Signalparametern darstellt.

Erfindungsgemäß führen die Funk-Basisstation bei Empfang eines zweiten Datagramms und die Funk-Teilnehmerstation zeitgleich eine Erfassung von jeweils lokal gemessenen Signalparametern der Funk-Verbindung zwischen der Funk-Basisstation und der Funk-Teilnehmerstation durch. Vorteilhafterweise übermittelt die Funk-Basisstation bei einer Erfassung von Signalparametern periodisch dritte Datagramme mit Messwerten an die Funk-Teilnehmerstation. Die jeweils lokal gemessenen Signalparameter können beispielsweise an einer der Funk-Teilnehmerstation zugeordneten Benutzerschnittstelle gemeinsam dargestellt werden.

Die vorliegende Erfindung bietet als Vorteile, dass eine Verbindungsanalyse nicht mehr nur an einem WLAN-Client o.ä. erfolgt, sondern parallel dazu auch an einem WLAN-Access-Point. Auf diese Weise lassen sich in vielen Fällen Ursachen für Verbindungsausfälle oder fallende Datenraten erkennen, die mit einer unidirektionalen Analyse an einem WLAN-Client nicht ohne weiteres detektierbar sind. Beispiele für derartige Fälle sind eine schwache oder gedämpfte Übertragungsleistung von einem WLAN-Client zu einem WLAN-Access-Point oder ein erhöhter Rauscheinfluss in Nähe eines WLAN-Access-Points.

Entsprechend einer vorteilhaften Ausgestaltung des erfindungsgemäßen Verfahrens umfasst das zweite Datagramm zumindest eine Angabe über eine Abtastrate. Dementsprechend führen die Funk-Basisstation und die Funk-Teilnehmerstation die Erfassung der jeweils lokal gemessenen Signalparameter mit dieser Abtastrate durch. Grundsätzlich kann die Funk-Basisstation mit einer Mehrzahl von Funk-Teilnehmerstationen verbunden sein. In diesem Fall führt die Funk-Basisstation bei Empfang eines jeweiligen zweiten Datagramms mit mehreren Funk-Teilnehmerstationen jeweils zeitgleich eine Erfassung lokal gemessener Signalparameter durch.

Die Funk-Basisstation oder die Funk-Teilnehmerstation übermittelt entsprechend einer bevorzugten Ausgestaltung der vorliegenden Erfindung bei einem Handover-Vorgang der Funk-Teilnehmerstation von der Funk-Basisstation zu einer weiteren Funk-Basisstation ein zweites Datagramm mit einer Anforderung zur Messung von während eines Rest-Zeitraums zu erfassenden Signalparametern an die weitere Funk-Basisstation. Vorteilhafterweise startet die weitere Funk-Basisstation bei Empfang eines zweiten Datagramms eine Erfassung lokal gemessener Signalparameter der Funk-Verbindung zwischen der weiteren Funk-Basisstation und der Funk-Teilnehmerstation und übermittelt ein viertes Datagramm über einen Start der Erfassung an die Funk-Basisstation. Bei Empfang eines vierten Datagramms kann die Funk-Basisstation die Erfassung der lokal gemessenen Signalparameter beenden.

Entsprechend einer weiteren Ausgestaltung des erfindungsgemäßen Verfahrens übermittelt die weitere Funk-Basisstation bei einer Erfassung von Signalparametern periodisch dritte Datagramme mit Messwerten an die Funk-Teilnehmerstation. Dementsprechend werden die jeweils lokal durch die Funk-Basisstation, die weitere Funk-Basisstation und die Funk-Teilnehmerstation gemessenen Signalparameter vorteilhafterweise an der zur Funk-Teilnehmerstation zugeordneten Benutzerschnittstelle gemeinsam dargestellt.

Die erfindungsgemäße Funk-Basisstation ist zur Durchführung eines Verfahrens entsprechend vorangehenden Ausführungen vorgesehen und dafür ausgestaltet sowie eingerichtet, periodisch erste Datagramme über eine Verfügbarkeit von an der Funk-Basisstation gemessenen Signalparametern zu senden. Außerdem ist die Funk-Basisstation dafür ausgestaltet und eingerichtet, von einer Funk-Teilnehmerstation ein zweites Datagramm mit einer Anforderung zur Messung von Signalparametern zu empfangen. Dabei umfasst das zweite Datagramm zumindest eine Angabe über einen Zeitraum für die Messung. Darüber hinaus ist die Funk-Basisstation dafür ausgestaltet und eingerichtet, bei Empfang eines zweiten Datagramms zeitgleich mit der Funk-Teilnehmerstation eine Erfassung von lokal gemessenen Signalparametern einer Funk-Verbindung zwischen der Funk-Basisstation und der Funk-Teilnehmerstation durchzuführen.

Die vorliegende Erfindung wird nachfolgend an einem Ausführungsbeispiel anhand der Zeichnung näher erläutert. Es zeigt
- Figur 1: ein WLAN-Kommunikationssystem mit einem WLAN-Access-Point und einer WLAN-Client-Station,
- Figur 2: ein WLAN-Kommunikationssystem mit zwei WLAN-Access-Points und einer mobilen WLAN-Client-Station während eines Handover-Vorgangs.

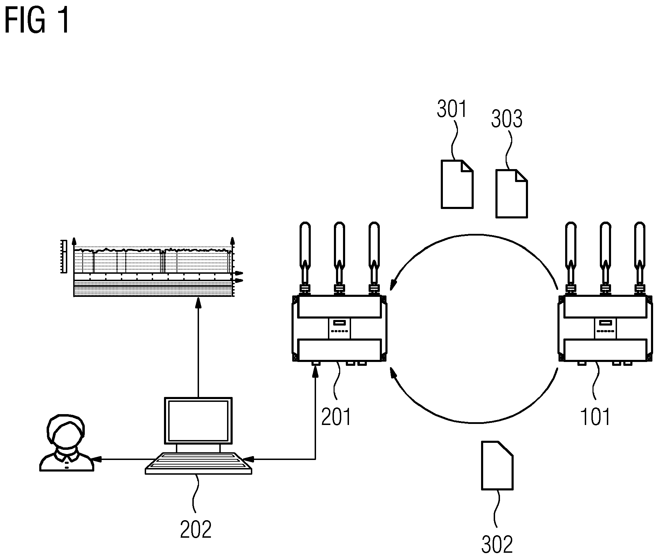

Das in Figur 1 dargestellte WLAN-Kommunikationssystem umfasst einen WLAN-Access-Point 101 und eine WLAN-Client-Station 201, die über eine Funk-Verbindung mit dem WLAN-Access-Point 101 verbunden ist. Nachfolgende Ausführungen sind nicht auf WLAN-Kommunikationssysteme beschränkt, sondern gelten allgemein für Funk-Kommunikationssysteme, bei denen Funk-Teilnehmerstationen über Funk-Verbindungen mit Funk-Basisstationen verbunden sind. Insofern steht der WLAN-Access-Point 101 repräsentativ für Funk-Basisstationen, während die WLAN-Client-Station 201 repräsentativ für Funk-Teilnehmerstationen steht. Anstelle von WLAN-Stationen können also grundsätzlich auch Funk-Transceiver-Stationen für ein WiMAX-, ein UMTS-, ein LTE-Mobilfunknetz oder ein sonstiges Mobilfunknetz verwendet werden.

Im Rahmen einer bidirektionalen Ermittlung einer Signalqualität der Funk-Verbindung zwischen dem WLAN-Access-Point 101 und der WLAN-Client-Station 201 sendet der WLAN-Access-Point 101 periodisch erste Datagramme 301 über eine Verfügbarkeit von am WLAN-Access-Point 101 gemessenen Signalparametern an WLAN-Client-Stationen in seiner Reichweite. Im vorliegenden Ausführungsbeispiel sind die ersten Datagramme 101 Beacon Frames.

Nach einer benutzergesteuerten Initiierung der Ermittlung der Signalqualität an einer computerbasierten Steuerungseinheit 202, die mit der WLAN-Client-Station 201 verbunden ist, und bei Vorliegen eines ersten Datagramms 301 über die Verfügbarkeit von am WLAN-Access-Point 101 gemessenen Signalparametern übermittelt die WLAN-Client-Station 201 ein zweites Datagramm 302 mit einer Anforderung zur Messung von Signalparametern an den WLAN-Access-Point 101. Ein solches zweites Datagramm 302 umfasst eine Angabe über einen Zeitraum für die Messung sowie eine Angabe über zu erfassende Signalparameter, die eine Auswahl aus im ersten Datagramm 301 angegebenen Signalparametern darstellen. Darüber hinaus umfasst das zweite Datagramm 302 eine Angabe über eine Abtastrate für die durch den WLAN-Access-Point 101 durchzuführende Messung.

Die computerbasierte Steuerungseinheit 202 kann beispielsweise auf Leitsystemebene einem SCADA-System (Supervisory Control and Data Acquisition) oder auf Feldebene einem Sensor- bzw. Aktorsystem eines industriellen Automatisierungssystems zugeordnet sein. Ein solches Sensor- bzw. Aktorsystem kann wiederum einen Fertigungsroboter, einen Antrieb für ein Fördersystem oder eine Bedien- und Beobachtungsstation an einer Fertigungslinie umfassen.

Bei Empfang eines zweiten Datagramms 302 führt der WLAN-Access-Point 101 zeitgleich mit der WLAN-Client-Station 201 eine Erfassung von lokal gemessenen Signalparametern der Funk-Verbindung zwischen dem WLAN-Access-Point 101 und der WLAN-Client-Station 201 durch. Sowohl der WLAN-Access-Point 101 als auch die WLAN-Client-Station 201 führen die Erfassung der jeweils lokal gemessenen Signalparameter mit der im zweiten Datagramm 302 angegebenen Abtastrate durch.

Der WLAN-Access-Point 101 übermittelt erfasste Signalparameter bzw. Messwerte periodisch mittels dritter Datagramme an die WLAN-Client-Station 201. Die jeweils lokal gemessenen Signalparameter werden dann an einer Anzeigeeinheit der computerbasierten Steuerungseinheit 202 gemeinsam dargestellt. Grundsätzlich kann der WLAN-Access-Point 101 mit einer Mehrzahl von WLAN-Client-Stationen gleichzeitig verbunden sein. In diesem Fall führt der WLAN-Access-Point 101 bei Empfang eines jeweiligen zweiten Datagramms 302 mit mehreren WLAN-Client-Stationen jeweils zeitgleich eine Erfassung lokal gemessener Signalparameter durch.

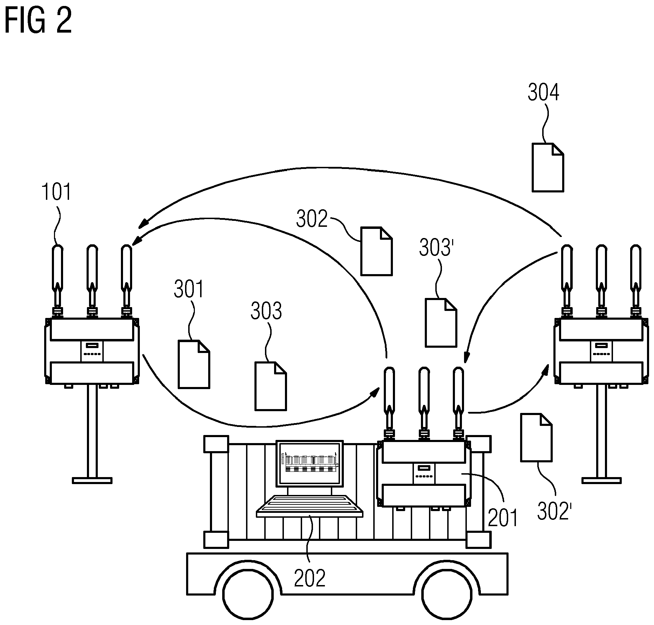

In Figur 2 ist ein WLAN-Kommunikationssystem dargestellt, das zwei WLAN-Access-Points 101-102 und eine mobile WLAN-Client-Station 201 umfasst. Während eines Handover-Vorgangs wechselt die mobile WLAN-Client-Station 201 ihre Funk-Verbindung vom WLAN-Access-Point 101 zu einem weiteren WLAN-Access-Point 102 und übermittelt dabei ein zweites Datagramm 302' mit einer Anforderung zur Messung von während eines Rest-Zeitraums zu erfassenden Signalparametern an den weiteren WLAN-Access-Point 102. Grundsätzlich könnte dieses zweite Datagramm 302' durch den WLAN-Access-Point 101 an den weiteren WLAN-Access-Point 102 übermittelt werden.

Bei Empfang eines zweiten Datagramms 302' startet der weitere WLAN-Access-Point 102 eine Erfassung lokal gemessener Signalparameter der Funk-Verbindung zwischen dem weiteren WLAN-Access-Point 102 und der mobilen WLAN-Client-Station 201 und übermittelt ein viertes Datagramm 304 über einen Start der Erfassung entweder direkt oder über die mobile WLAN-Client-Station 201 an den WLAN-Access-Point 101. Der WLAN-Access-Point 101 beendet die Erfassung der lokal gemessenen Signalparameter bei Empfang eines vierten Datagramms 304. Dagegen übermittelt der weitere WLAN-Access-Point 102 bei einer Erfassung von Signalparametern periodisch dritte Datagramme 303' mit Messwerten an die WLAN-Client-Station 201. Die jeweils lokal durch den WLAN-Access-Point 101, den weiteren WLAN-Access-Point 102 und die WLAN-Client-Station 201 gemessenen Signalparameter werden an der Anzeigeeinheit der computerbasierten Steuerungseinheit 202 gemeinsam dargestellt.

## Patentansprüche

1. Verfahren zur Ermittlung einer Signalqualität einer Funk-Verbindung zwischen einer Funk-Basisstation und zumindest einer Funk-Teilnehmerstation, bei dem
- die Funk-Basisstation (101) periodisch erste Datagramme (301) über eine Verfügbarkeit von an der Funk-Basisstation gemessenen Signalparametern sendet,
- die Funk-Teilnehmerstation (201) nach Initiierung einer Ermittlung der Signalqualität der Funk-Verbindung zwischen der Funk-Basisstation und der Funk-Teilnehmerstation und bei Empfang eines ersten Datagramms ein zweites Datagramm (302) mit einer Anforderung zur Messung von Signalparametern an die Funk-Basisstation übermittelt, wobei das zweite Datagramm zumindest eine Angabe über einen Zeitraum für die Messung umfasst,
- die Funk-Basisstation bei Empfang eines zweiten Datagramms und die Funk-Teilnehmerstation zeitgleich eine Erfassung von jeweils lokal gemessenen Signalparametern der Funk-Verbindung zwischen der Funk-Basisstation und der Funk-Teilnehmerstation durchführen.

2. Verfahren nach Anspruch 1,
bei dem das zweite Datagramm eine Angabe über zumindest einen zu erfassenden Signalparameter umfasst, der eine Auswahl aus im ersten Datagramm angegebenen Signalparametern darstellt.

3. Verfahren nach Anspruch 1 oder 2,
bei dem das zweite Datagramm zumindest eine Angabe über eine Abtastrate umfasst und bei dem die Funk-Basisstation und die Funk-Teilnehmerstation die Erfassung der jeweils lokal gemessenen Signalparameter mit dieser Abtastrate durchführen.

4. Verfahren nach Anspruch 1 bis 3,
bei dem die Funk-Basisstation (101) bei einer Erfassung von Signalparametern periodisch dritte Datagramme (303) mit Messwerten an die Funk-Teilnehmerstation (201) übermittelt.

5. Verfahren nach Anspruch 4,
bei dem die jeweils lokal gemessenen Signalparameter an einer der Funk-Teilnehmerstation (201) zugeordneten Benutzerschnittstelle (202) gemeinsam dargestellt werden.

6. Verfahren nach einem der Ansprüche 1 bis 5,
bei dem die Funk-Basisstation mit einer Mehrzahl von Funk-Teilnehmerstationen verbunden ist und bei Empfang eines jeweiligen zweiten Datagramms mit mehreren Funk-Teilnehmerstationen jeweils zeitgleich eine Erfassung lokal gemessener Signalparameter durchführt.

7. Verfahren nach einem der Ansprüche 1 bis 6,
bei dem die Funk-Basisstation oder die Funk-Teilnehmerstation bei einem Handover-Vorgang der Funk-Teilnehmerstation (201) von der Funk-Basisstation (101) zu einer weiteren Funk-Basisstation (102) ein zweites Datagramm (302') mit einer Anforderung zur Messung von während eines Rest-Zeitraums zu erfassenden Signalparametern an die weitere Funk-Basisstation übermittelt.

8. Verfahren nach Anspruch 7,
bei dem die weitere Funk-Basisstation (102) bei Empfang eines zweiten Datagramms (302') eine Erfassung lokal gemessener Signalparameter der Funk-Verbindung zwischen der weiteren Funk-Basisstation und der Funk-Teilnehmerstation startet und ein viertes Datagramm (304) über einen Start der Erfassung an die Funk-Basisstation (101) übermittelt und bei dem die Funk-Basisstation die Erfassung der lokal gemessenen Signalparameter bei Empfang eines vierten Datagramms beendet.

9. Verfahren nach Anspruch 8,
bei dem die weitere Funk-Basisstation (102) bei einer Erfassung von Signalparametern periodisch dritte Datagramme (303') mit Messwerten an die Funk-Teilnehmerstation (201) übermittelt und bei dem die jeweils lokal durch die Funk-Basisstation, die weitere Funk-Basisstation und die Funk-Teilnehmerstation gemessenen Signalparameter an der zur Funk-Teilnehmerstation zugeordneten Benutzerschnittstelle (202) gemeinsam dargestellt werden.

10. Verfahren nach einem der Ansprüche 1 bis 9,
bei dem die ersten Datagramme Beacon Frames sind.

11. Funk-Basisstation zur Durchführung eines Verfahrens nach einem der Ansprüche 1 bis 10,
- wobei die Funk-Basisstation dafür ausgestaltet und eingerichtet ist, periodisch erste Datagramme über eine Verfügbarkeit von an der Funk-Basisstation gemessenen Signalparametern zu senden,
- wobei die Funk-Basisstation dafür ausgestaltet und eingerichtet ist, von einer Funk-Teilnehmerstation ein zweites Datagramm mit einer Anforderung zur Messung von Signalparametern zu empfangen, wobei das zweite Datagramm zumindest eine Angabe über einen Zeitraum für die Messung umfasst und
- wobei die Funk-Basisstation dafür ausgestaltet und eingerichtet ist, bei Empfang eines zweiten Datagramms zeitgleich mit der Funk-Teilnehmerstation eine Erfassung von lokal gemessenen Signalparametern einer Funk-Verbindung zwischen der Funk-Basisstation und der Funk-Teilnehmerstation durchzuführen.

## Claims

1. Method for ascertaining a signal quality of a radio link between a radio base station and at least one radio subscriber station, in which
- the radio base station (101) periodically sends first datagrams (301) about an availability of signal parameters measured at the radio base station,
- the radio subscriber station (201), after initiation of an ascertainment of the signal quality of the radio link between the radio base station and the radio subscriber station and on reception of a first datagram, transmits a second datagram (302) with a request for measurement of signal parameters to the radio base station, the second datagram comprising at least one statement about a period for the measurement,
- the radio base station, on reception of a second datagram, and the radio subscriber station simultaneously perform a capture of respective locally measured signal parameters for the radio link between the radio base station and the radio subscriber station.

2. Method according to Claim 1,
in which the second datagram comprises a statement about at least one signal parameter to be captured that represents a selection from signal parameters indicated in the first datagram.

3. Method according to Claim 1 or 2,
in which the second datagram comprises at least one statement about a sampling rate and in which the radio base station and the radio subscriber station perform the capture of the respective locally measured signal parameters at this sampling rate.

4. Method according to Claims 1 to 3,
in which the radio base station (101), on capture of signal parameters, periodically transmits third datagrams (303) with measured values to the radio subscriber station (201).

5. Method according to Claim 4,
in which the respective locally measured signal parameters are depicted jointly on a user interface (202) associated with the radio subscriber station (201).

6. Method according to one of Claims 1 to 5,
in which the radio base station is connected to a plurality of radio subscriber stations and, on reception of a respective second datagram, simultaneously performs a capture of locally measured signal parameters with each of multiple radio subscriber stations.

7. Method according to one of Claims 1 to 6,
in which the radio base station or the radio subscriber station, on a handover operation by the radio subscriber station (201) from the radio base station (101) to a further radio base station (102), transmits a second datagram (302') with a request for measurement of signal parameters to be captured during a remaining period to the further radio base station.

8. Method according to Claim 7,
in which the further radio base station (102), on reception of a second datagram (302'), starts a capture of locally measured signal parameters for the radio link between the further radio base station and the radio subscriber station and transmits a fourth datagram (304) about a start of the capture to the radio base station (101) and in which the radio base station terminates the capture of the locally measured signal parameters on reception of a fourth datagram.

9. Method according to Claim 8,
in which the further radio base station (102), on capture of signal parameters, periodically transmits third datagrams (303') with measured values to the radio subscriber station (201) and in which the respective signal parameters locally measured by the radio base station, the further radio base station and the radio subscriber station are depicted jointly on the user interface (202) associated with the radio subscriber station.

10. Method according to one of Claims 1 to 9,
in which the first datagrams are beacon frames.

11. Radio base station for performing a method according to one of Claims 1 to 10,
- wherein the radio base station is configured and set up to periodically send first datagrams about an availability of signal parameters measured at the radio base station,
- wherein the radio base station is configured and set up to receive from a radio subscriber station a second datagram with a request for measurement of signal parameters, the second datagram comprising at least one statement about a period for the measurement, and
- wherein the radio base station is configured and set up so as, on reception of a second datagram, to perform a capture of locally measured signal parameters for a radio link between the radio base station and the radio subscriber station simultaneously with the radio subscriber station.

## Revendications

1. Procédé de détermination de la qualité du signal d'une liaison radio entre une station de base radio et au moins une station d'un abonné radio, dans lequel
- la station (101) de base radio envoie périodiquement des premiers datagrammes (301) sur une disponibilité de paramètres de signal mesurés à la station de base radio,
- la station (201) d'un abonné radio transmet à la station de base radio, après lancement d'une détermination de la qualité du signal de la liaison radio entre le poste de base radio et le poste d'un abonné radio et à la réception d'un premier datagramme, un deuxième datagramme (302) ayant une demande de mesure de paramètres du signal, le deuxième datagramme comprenant au moins une indication sur un laps de temps pour la mesure,
- la station de base radio, à la réception d'un deuxième datagramme et la station d'un abonné radio effectuent en même temps une détection de paramètres de signal mesurés localement de la liaison radio entre la station de base radio et la station d'un abonné radio.

2. Procédé suivant la revendication 1,
dans lequel le deuxième datagramme comprend une indication sur au moins un paramètre de signal à détecter, qui représente un choix de paramètres de signal indiqués dans le premier datagramme.

3. Procédé suivant la revendication 1 ou 2,
dans lequel le deuxième datagramme comprend au moins une indication sur un taux d'échantillonnage et dans lequel la station de base radio et la station d'un abonné radio effectuent, à ce taux d'échantillonnage, la détection des paramètres de signal mesurés localement.

4. Procédé suivant la revendication 1 à 3,
dans lequel la station (101) de base radio transmet à la station (201) d'un abonné radio, lorsque des paramètres de signal sont détectés, périodiquement des troisièmes datagrammes (303) ayant des valeurs de mesure.

5. Procédé suivant la revendication 4,
dans lequel les paramètres de signal mesurés localement sont représentés conjointement sur une interface (202) d'utilisateur associée à la station (201) d'un abonné radio.

6. Procédé suivant l'une des revendications 1 à 5,
dans lequel la station de base radio est reliée à une pluralité de stations d'un abonné radio et, à la réception d'un deuxième datagramme par plusieurs stations d'un abonné radio, effectue en même temps une détection de paramètres du signal mesurés localement.

7. Procédé suivant l'une des revendications 1 à 6,
dans lequel la station de base radio ou la station d'un abonné radio transmet à l'autre station de base radio, lors d'une opération d'handover de la station d'un abonné radio, de la station (101) de base radio à une autre station (102) de base radio, un deuxième datagramme (302'), ayant une demande de mesure de paramètres du signal à détecter pendant un laps de temps restant.

8. Procédé suivant la revendication 7,
dans lequel l'autre station (102) de base radio lance, à la réception d'un deuxième datagramme (302'), une détection de paramètres du signal mesurés localement de la liaison radio entre l'autre station de base radio et la station d'un abonné radio, et transmet un quatrième datagramme (304) sur un lancement de détection à la station (101) de base radio et dans lequel la station de base radio met fin à la détection des paramètres du signal mesurés localement à la réception d'un quatrième datagramme.

9. Procédé suivant la revendication 8,
dans lequel l'autre station (102) de base radio transmet à la station (201) d'un abonné radio, à la réception de paramètre du signal, périodiquement des troisième datagrammes (303') ayant des valeurs de mesure et dans lequel les paramètres du signal mesurés localement par la station de base radio, par l'autre station de base radio et par la station d'un abonné radio sont représentés conjointement sur l'interface (202) d'utilisateur associée à la station d'un abonné radio.

10. Procédé suivant l'une des revendications 1 à 9,
dans lequel les premiers datagrammes sont des beacon frames.

11. Station de base radio pour effectuer un procédé suivant l'une des revendications 1 à 10,
- dans laquelle la station de base radio est conformée et conçue pour envoyer périodiquement de premiers datagrammes sur une disponibilité de paramètres du signal mesurés à la station de base radio,
- dans laquelle la station de base radio est conformée et conçue pour recevoir, d'une station d'un abonné radio, un deuxième datagramme ayant une demande de mesure de paramètres du signal, le deuxième datagramme comprenant au moins une indication sur un laps de temps pour la mesure et
- dans laquelle la station de base radio est conformée et conçue pour effectuer, à la réception d'un deuxième datagramme, en même temps que la station d'un abonné radio, une détection de paramètres du signal mesurés localement d'une liaison radio entre la station de base radio et la station d'un abonné radio.
